# EUROPÄISCHE PATENTSCHRIFT

(11) **EP 2 017 107 B1**
(45) Veröffentlichungstag und Bekanntmachung des Hinweises auf die Patenterteilung: **02.03.2011**
(21) Anmeldenummer: 08011898.7
(22) Anmeldetag: 02.07.2008
(51) Int. Cl.: B60J 7/00

(54) **Beschattungsrollo mit Rolloverriegelung**
Shade roller with roller lock
Store pour ombrager doté d'un verrouillage

(30) Priorität: 20.07.2007 DE 102007035043
(43) Veröffentlichungstag der Anmeldung: 21.01.2009
(73) Patentinhaber: BOS GmbH & Co. KG, 73760 Ostfildern (DE)
(72) Erfinder: Hansen, Melf, 75053 Gondelsheim (DE)
(74) Vertreter: Wilhelm, Peter

(56) Entgegenhaltungen:
- EP-A- 1 389 544
- EP-A- 1 714 813
- DE-A1- 19 806 736
- DE-U1-202005 020 611
- DE-U1-202007 016 325

## Beschreibung

Die Erfindung betrifft ein Beschattungsrollo für eine Kraftfahrzeugscheibe mit einem auf einer Wickelwelle auf- und abwickelbaren, flexiblen Flächengebilde, das mit Hilfe mindestens eines Linearführungsmittels aus einer Verstauposition in eine zumindest teilweise abgewickelte Schutzposition bewegbar ist.

Beschattungsrollos können an Heckfenstern, Seitenfenstern und/oder Panoramafenstern von Fahrzeugen vorgesehen sein. Das flexible Flächengebilde, auch als Rollobahn bezeichnet, ist je nach Anforderung aus einem geeigneten Material gestaltet. Zum Abwickeln des flexiblen Flächengebildes von der Wickelwelle ist es beispielsweise bekannt, an einem freien Ende des flexiblen Flächengebildes eine Auszugleiste oder ein Auszugprofil mit dem flexiblen Flächengebilde zu verbinden, welche sich vorzugsweise über die gesamte Breite des Flächengebildes erstreckt. Die Auszugleiste oder das Auszugprofil ist durch geeignete Mittel, beispielsweise Scheren- oder Schwenkarme, knicksteife Antennen, in Führungsschienen geführte Zahnstangen oder zentrale Teleskoparme bewegbar. Ein Antrieb dieser Linearführungsmittel erfolgt beispielsweise elektrisch, pneumatisch und/oder hydraulisch.

Es ist weiter beispielsweise aus der DE 201 129 48 U1 bekannt, eine manuell lösbare Blockiereinrichtung vorzusehen, durch welche ein Linearführungsmittel in einer Verstauposition oder Schutzposition arretierbar ist, wobei nach einem Lösen der Blockiereinrichtung ein mechanisches Antriebsmittel wirksam ist, so dass das flexible Flächengebilde von der Wickelwelle abgewickelt wird. Die Blockiereinrichtung ist mittels Knopfauslösung lösbar, wobei ein hierzu notwendiger Schalter beispielsweise in einer Türverkleidung integriert ist. Das als Antenne ausgebildete Linearführungsmittel ist aufgrund eines erforderlichen Bauraums beispielsweise im Nassbereich der Fahrzeugtüre angeordnet. Das Linearführungsmittel und der Schalter sind über einen Bowdenzug oder dergleichen miteinander gekoppelt.

Es ist Aufgabe der Erfindung, ein Beschattungsrollo zu schaffen, das mit einfachen Mitteln eine komfortable und zuverlässige Bedienung ermöglicht.

Diese Aufgabe wird gelöst durch ein Beschattungsrollo für eine Kraftfahrzeugscheibe mit einem auf einer Wickelwelle auf- und abwickelbaren, flexiblen Flächengebilde, das mit Hilfe mindestens eines Linearführungsmittels aus einer Verstauposition in eine zumindest teilweise abgewickelte Schutzposition bewegbar ist, und mit einer lösbaren Blockiereinrichtung, durch welche das Linearführungsmittel mindestens in einer Position, insbesondere der Schutzposition und/oder der Verstauposition arretierbar ist, wobei die Blockiereinrichtung eine push-push-Verriegelung umfasst.

Als push-push-Verriegelung wird dabei ein Betätigungsmechanismus, welcher nach einem so genannten Druckkugelschreiberprinzip funktioniert, bezeichnet. Ein Verriegeln und ein Lösen der Blockiereinrichtung wird dabei durch Aufbringen einer Kraft immer in eine gleich Betätigungsrichtung und/oder eine der Kraft entsprechende Bewegung realisiert. Bei der Kraft handelt es sich zumeinst um eine Druckkraft. Durch die push-push-Verriegelung wird beispielsweise ein Ausziehen oder Abwickeln der Rollobahn verhindert. In einer anderen Ausgestaltung verriegelt die Blockiereinrichtung ein Aufwickeln der Rollobahn.

In einer Ausgestaltung der Erfindung ist das Linearführungsmittel in der Verstauposition arretierbar, wobei die Blockiereinrichtung durch Aufbringen einer Kraft, insbesondere einer Druckkraft, an dem Linearführungsmittel und/oder Bewegen des Linearführungsmittels entgegen einer Abwickelrichtung lösbar ist. In anderen Worten wird zum Lösen der Blockiereinrichtung und Abwickeln der Rollobahn vorzugsweise eine Druckkraft entgegen einer zum Abwickeln notwendigen Zugkraft aufgebracht. Zum Verriegeln ist dabei die zum Aufwickeln notwendige Rückstellkraft nutzbar. Die Löse- bzw. Verriegelungskraft ist vorzugsweise auf einfache Weise durch Andrücken des Linearführungsmittels und/oder von Teilen davon entgegen der Abwickelrichtung aufbringbar. Es ist jedoch auch denkbar, Kraftumlenkungsmittel vorzusehen, so dass durch einen Nutzer eine Zugkraft aufgebracht wird, welche jedoch für die push-push-Verriegelung als Druckkraft wirkt. Durch eine push-push-Verriegelung kann auf Schaltelemente oder dergleichen, welche beispielsweise an einer Innenverkleidung einer Seitentür zu integrieren sind, verzichtet werden. Ein mechanischer Aufwand zur Gestaltung einer push-push-Verriegelung ist gering, so dass ein kostengünstiges Beschattungsrollo geschaffen wird. Dabei ist in einer Ausgestaltung die Blockiereinrichtung zumindest teilweise an einem Gehäuse oder dergleichen der Wickelwelle angeordnet, wobei das erfindungsgemäße Beschattungsrollo als kompakte Baueinheit gestaltet werden kann, welche in einer Vormontage zusammengebaut und getestet werden kann. Die getestete Einheit kann als ein Bauteil in einem Kraftfahrzeug verbaut werden. Zum Abwickeln der Rollobahn ist ein beliebiges Linearführungsmittel einsetzbar, beispielsweise sind seitliche Führungsschienen, Schwenkarme und/oder zentral angeordnete Betätigungsstangen denkbar.

In einer Ausgestaltung des Beschattungsrollos ist ein in die Abwickelrichtung wirksames mechanisches Antriebsmittel vorgesehen, durch das nach einem Lösen der Blockiereinrichtung das flexible Flächengebilde von der Wickelwelle abwickelbar ist. Da das Antriebsmittel nur in eine Richtung, nämlich die Abwickelrichtung, wirksam ist, wird eine entsprechende Anordnung auch als Halbautomatik bezeichnet. Ein Aufwickeln des flexiblen Flächengebildes erfolgt in einer Ausgestaltung manuell, wobei an der Wickelwelle vorzugsweise eine Rückholfeder oder dergleichen vorgesehen ist, durch welche gewährleistet wird, dass das flexible Flächengebilde kompakt auf die Wickelwelle aufgerollt wird.

In einer weiteren Ausgestaltung des Beschattungsrollos ist das mechanische Antriebsmittel als Federspeicheranordnung gestaltet. Je nach Orientierung umfasst die Federspeicheranordnung eine Druckfeder, beispielsweise eine Schraubendruckfeder, oder eine Zugfeder. Ein Aufwickeln des flexiblen Flächengebildes erfolgt gegen eine Wirkung der Feder, wobei zum Abwickeln des flexiblen Flächengebildes die so gespeicherte Kraft an dem Linearführungsmittel angreift.

In einer weiteren Ausgestaltung des Beschattungsrollos umfasst die Blockiereinrichtung mindestens ein Rastelement, welches mit dem Linearführungsmittel für eine Arretierung zusammenwirkt. Je nach Gestaltung des Linearführungsmittels kann ein Gegenrastelement an dem Auszugprofil oder an anderen Elementen angeordnet sein. In anderen Ausgestaltungen ist ein Rastelement an dem Linearführungsmittel vorgesehen.

In einer Weiterbildung des Beschattungsrollos umfasst das Linearführungsmittel eine Führung mit einer Führungsnut, in welcher das Rastelement geführt ist, wobei die Führungsnut mindestens eine Raststelle aufweist. Die Raststelle ist komplementär zu dem Rastelement gestaltet, so dass dieses dort verrastbar ist. Das Rastelement ist in einer Ausgestaltung quer zur Abwickelrichtung, insbesondere in einem rechten Winkel dazu, verschieblich an der Blockiereinrichtung gelagert. Dadurch ergeben sich besonders vorteilhafte Möglichkeiten für die Gestaltung der Führungsnut.

In einer Weiterbildung des Beschattungsrollos weist die Führungsnut zumindest abschnittsweise die Form einer Herzkurve auf. Eine derartige Form hat sich für die Realisierung einer push-push-Verriegelung als besonders vorteilhaft erwiesen.

In einer anderen Ausgestaltung des Beschattungsrollos ist alternativ oder zusätzlich eine Blockiereinrichtung mit einer push-push-Verriegelung vorgesehen, deren Betätigungsrichtung quer zur Abwickelrichtung, insbesondere in einem Winkel von ca. 90° zu dieser verläuft. Dabei kann ein Betätigungsschalter oder -knopf vorgesehen sein, wobei durch Drücken des Knopfes eine Verriegelung und/oder eine Entriegelung möglich ist. Das Beschattungsrollo ist vorzugsweise mit einer Halbautomatik ausgestattet. In einer Ausgestaltung der Erfindung ist eine Rückholfeder vorgesehen, wobei die Rollobahn entgegen der Kraft der Rückholfeder manuell ausgefahren werden kann und in einer beliebigen ausgefahrenen Position, insbesondere in einer Schutzposition, verriegelbar ist. Durch Lösen der Blockiereinrichtung wird die Rollobahn durch die Kraft der Rückholfeder automatisch eingezogen. In einer anderen Ausgestaltung ist ein in Abwickelrichtung wirksames Antriebsmittel, beispielsweise eine Federspeicheranordnung vorgesehen, wobei nach Lösen der Blockiereinrichtung die Rollobahn durch das Antriebsmittel abgewickelt wird. Es ist offensichtlich, dass anstelle eines Betätigungsknopfes oder eines anderen durch Druckkraft betätigbaren Elements auch ein durch Zugkraft betätigbares Element wie eine Schlaufe oder dergleichen vorgesehen werden können, wobei durch Aufbringen einer Kraft in eine Betätigungsrichtung ein Verriegeln und ein Lösen erfolgt.

In einer Ausgestaltung der Erfindung weist das Linearführungsmittel mindestens einen schwenkbaren Schalter und die Blockiereinrichtung mindestens ein bewegbares Schaltelement zum Betätigen des Schalters auf, wobei der Schalter und das Schaltelement zum Arretieren des Linearführungsmittels zusammenwirken. Durch das Schaltelement wird der Schalter zum Verriegeln oder Lösen verschwenkt. Das Schaltelement weist in einer Ausgestaltung eine Angriffsfläche für einen Benutzer auf, wobei durch Aufbringen einer Kraft an der Angriffsfläche das Schaltelement verschwenkbar und damit das Linearführungsmittel arretierbar ist.

In einer weiteren Ausgestaltung des Beschattungsrollos umfasst die Blockiereinrichtung einen Antrieb. Durch den Antrieb ist in einer Ausgestaltung das Schaltelement zum Verriegeln und/oder zum Lösen der Verriegelung bewegbar. Da nur ein geringer Stellweg erforderlich ist, kann der Antrieb wesentlich kompakter gestaltet werden, als ein zum Auf- und/oder Abwickeln der Rollobahn über die gesamte Länge notwendiger Antrieb. Der Antrieb ist in einer Ausgestaltung ferngesteuert betreibbar, so dass beispielsweise ein im Fondbereich vorgesehenes Beschattungs- oder Schutzrollo durch einen Fahrer auf einfache Weise auf- und/oder abwickelbar ist.

In einer weiteren Ausgestaltung des Beschattungsrollos umfasst das Linearführungsmittel mindestens eine Stange, die mit einem an dem flexiblen Flächengebilde angebrachten Auszugprofil für eine Bewegungsübertragung wirkverbunden ist. Das Auszugprofil ist vorzugsweise an einem freien Rand des flexiblen Flächengebildes angebracht, wobei eine Anbringung fest oder schwimmend erfolgen kann. Das Auszugprofil kann sich über die gesamte Breite des flexiblen Flächengebildes erstrecken. Das Auszugprofil kann als Stange oder dergleichen beispielsweise aus Metall oder Kunststoff geschaffen werden. In anderen Ausgestaltungen ist das Auszugprofil einteilig mit dem flexiblen Flächengebilde als Verstärkung realisiert.

In einer anderen Ausgestaltung des Beschattungsrollos umfasst das Linearführungsmittel mindestens einen Teleskopstab, der mit dem an dem flexiblen Flächengebilde angebrachten Auszugprofil für die Bewegungsübertragung wirkverbunden ist. Der Teleskopstab wird in einer Ausgestaltung durch die Federspeicheranordnung in eine ausgefahrene oder eine zusammengeschobene Position überführt, wobei der Teleskopstab in der zusammengeschobenen Position nur wenig Bauraum benötigt.

Weitere Vorteile der Erfindung ergeben sich aus der nachfolgenden Beschreibung von Ausführungsbeispielen der Erfindung, die in den Zeichnungen schematisch dargestellt sind. Für gleiche oder ähnliche Bauteile werden in den Zeichnungen einheitliche Bezugszeichen verwendet. Sämtliche aus den Ansprüchen, der Beschreibung oder den Zeichnungen hervorgehende Merkmale und/oder Vorteile, einschließlich Verfahrensschritte, konstruktive Einzelheiten und räumliche Anordnungen, können sowohl für sich als auch in den verschiedensten Kombinationen erfindungswesentlich sein. Als Teil eines Ausführungsbeispiels beschriebene oder dargestellte Merkmale können ebenso in einem anderen Ausführungsbeispiel verwendet werden, um eine weitere Ausführungsform der Erfindung zu erhalten.

In den Zeichnungen zeigen:
- Fig. 1:: eine teilweise freigeschnittene, perspektivische Darstellung ei- nes Fondbereichs eines Kraftfahrzeugs mit Blick auf die Innen- seite der hinteren, rechten Tür;
- Fig. 2:: die hintere, rechte Tür gemäß Fig. 1 mit einem erfindungsge- mäßen Seitenfensterrollo gemäß einem ersten Ausführungsbei- spiel in einer teilweise freigeschnittenen Darstellung;
- Fig. 3a:: eine Führungsnut für eine erfindungsgemäße Blockiereinrich- tung mit einem Rastelement in einer ersten Funktionsstellung;
- Fig. 3b:: die Führungsnut gemäß Fig. 3a mit dem Rastelement in einer zweiten Funktionsstellung;
- Fig. 4:: die hintere, rechte Tür gemäß Fig. 1 mit einem erfindungsge- mäßen Beschattungsrollo gemäß einem zweiten Ausführungs- beispiel in einer teilweise freigeschnittenen Darstellung;
- Fig. 5:: ein Seitenfensterrollo mit einer Blockiereinrichtung gemäß ei- nem dritten Ausführungsbeispiel der Erfindung;
- Fig. 6:: einen ersten Betriebszustand bei einer Betätigung der Blockier- einrichtung gemäß Fig. 5;
- Fig. 7:: einen zweiten Betriebszustand bei einer Betätigung der Blo- ckiereinrichtung gemäß Fig. 5;
- Fig. 8:: eine Blockiereinrichtung gemäß einem vierten Ausführungsbei- spiel der Erfindung während des Ausfahrens eines Rollos;
- Fig. 9:: die Blockiereinrichtung gemäß Fig. 8 bei Erreichen eines Schaltpunktes;
- Fig. 10:: die Blockiereinrichtung gemäß Fig. 8 in einem verrasteten Zu- stand;
- Fig. 11:: die Blockiereinrichtung gemäß Fig. 8 beim Lösen der Verras- tung und
- Fig. 12:: die Blockiereinrichtung gemäß Fig. 8 beim Einfahren der Rollo- bahn.

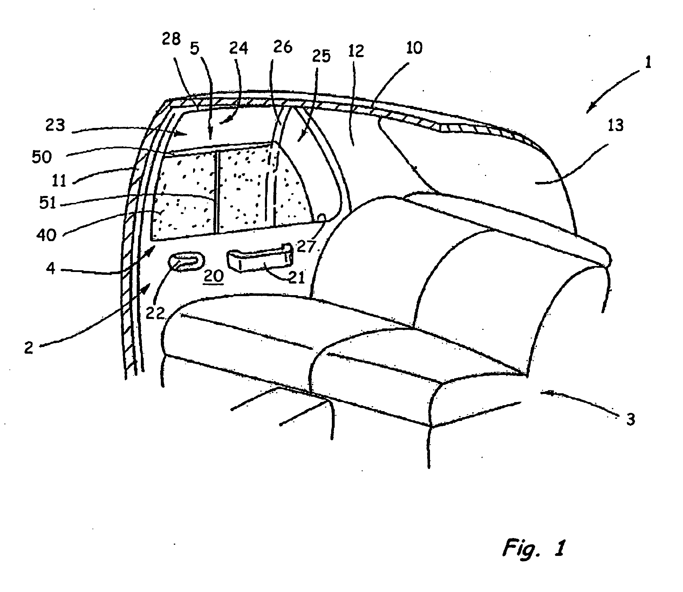

Figur 1 zeigt schematisch einen Fondbereich eines Kraftfahrzeugs 1 in einer teilweise freigeschnittenen, perspektivischen Darstellung mit Blick auf die Innenseite einer hinteren, rechten Seitentür 2. Das Kraftfahrzeug 1 weist ein Fahrzeugdach 10 auf, von dem seitlich eine B-Säule 11 des Kraftfahrzeugs 1 zu einer nicht dargestellten Bodengruppe führt. Bekanntermaßen ist eine entsprechende B-Säule auch auf der Figur 1 nicht dargestellten linken Seite des Kraftfahrzeugs 1 vorgesehen. Das dargestellte Kraftfahrzeug 1 weist weiter eine C-Säule 12 auf. Das Dach 10 geht an einer Hinterkante in einen Rahmen einer Heckfensteröffnung 13 über, in welche eine nicht dargestellte Heckscheibe eingesetzt werden kann. Zwischen der B-Säule 11 und der C-Säule 12 ist die rechte, hintere Seitentür 2 auf bekannte Weise angebracht, insbesondere mittels nicht dargestellter Scharniere. Auf Höhe der Seitentür 2 befindet sich eine Rücksitzbank 3.

Die in Fig. 1 sichtbare, einem Innenraum des Kraftfahrzeugs 1 zugewandte Innenseite der Seitentür 2 weist eine Innenverkleidung 20 auf. An der Innenverkleidung 20 sind ein Türgriff 21 und eine Betätigungsklinke 22 für ein nicht dargestelltes Türschloss vorgesehen. Weitere, nicht dargestellte Elemente, wie Lautsprecher und dergleichen, können ebenfalls in die Seitentür 2 integriert und/oder daran angebracht sein.

Die Seitentür 2 weist eine Fensteröffnung 23 auf, welche in einen ersten Abschnitt 24 und einen zweiten Abschnitt 25 durch einen Steg 26 unterteilt ist. Der zweite Abschnitt 25 ist dabei als Öffnung für ein sogenanntes Dreiecksfenster gestaltet, so dass die Fensteröffnung 23 im Wesentlichen trapezförmig ist. Die Fensteröffnung 23 weist einen unteren Rand 27 und einen oberen Rand 28 auf, wobei der obere Rand 28 üblicherweise nicht parallel zu dem unteren Rand 27 verläuft, sondern gekrümmt verlaufen kann. In die Fensteröffnung 23 ist ein nicht dargestelltes, zweiteiliges Seitenfenster einsetzbar. Das Seitenfenster ist üblicherweise zumindest in dem ersten Abschnitt 24 verschieblich.

Die Fensteröffnung 23 ist weiter durch ein erfindungsgemäßes Beschattungsrollo verdunkelbar, welches in dem Ausführungsbeispiel als Seitenfensterrollo 4 mit einer Rollobahn 40 gestaltet ist. In anderen Ausführungsformen dient ein erfindungsgemäßes Beschattungsrollo einer Abdeckung der Heckscheibenöffnung 13. Zum Abwickeln der Rollobahn 40 von einer in Fig. 1 nicht dargestellten Wickelwelle umfasst das dargestellte Seitenfensterrollo 4 Linearführungsmittel 5 mit einem Auszugprofil 50 und einer Stange 51. Das Auszugprofil 50 ist an einem freien Rand der Rollobahn 40 angebracht und mittels der Stange 51 bewegbar. Alternativ und/oder zusätzlich ist das Auszugprofil 50 in seitlichen Führungsschienen geführt.

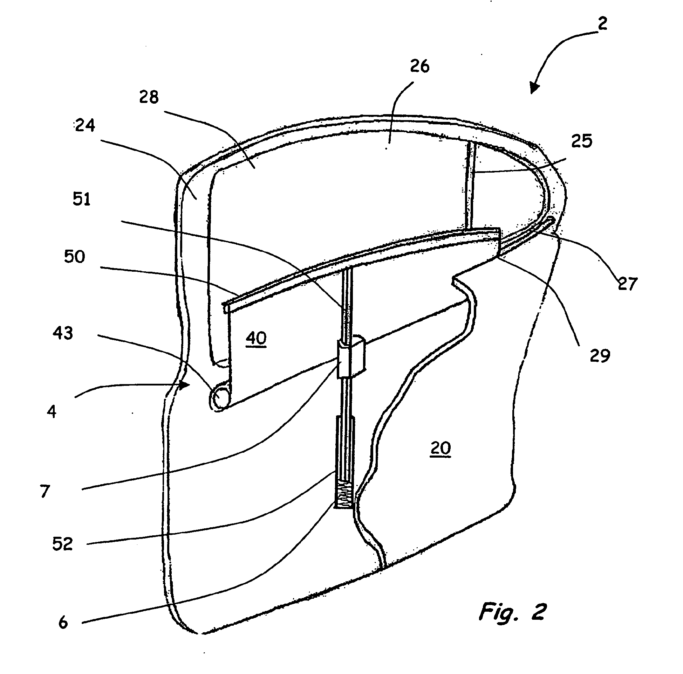

Fig. 2 zeigt schematisch die Seitentür 2 gemäß Fig. 1. Für gleiche Bauteile werden einheitliche Bezugszeichen verwendet und auf eine detaillierte Beschreibung dieser Bauteile wird verzichtet. In der Darstellung gemäß Fig. 2 ist die Innenverkleidung 20 der Seitentür 2 teilweise freigeschnitten. Dadurch sind im normalen Gebrauch nicht sichtbare Teile des Seitenfensterrollos 4 sichtbar. Das Seitenfensterrollo 4 umfasst eine Wickelwelle 43, an welcher die Rollobahn 40 auf- und abwickelbar befestigt ist. In der Darstellung gemäß Fig. 2 ist die Rollobahn 40 nur teilweise abgewickelt. Wie in Figur 2 erkennbar, ist die Rollobahn 40 beim Aufwickeln auf die Wickelwelle 43 über einen Schlitz 29 hinter der Innenverkleidung 20 der Seitentür 2 versenkbar. Die Rollobahn 40 ist dabei in einer vorteilhaften Ausgestaltung vollständig hinter der Innenverkleidung 20 versenkbar, wobei jedoch das Auszugprofil 50 zumindest teilweise sichtbar hervorsteht. Das dargestellte Auszugprofil 50 ist zumindest abschnittsweise gekrümmt, so dass das Auszugprofil 50 an den Verlauf des oberen Rands 28 der abzudeckenden Fensteröffnung 23 anpassbar ist. Dadurch ist eine gute Abdunkelung des zugehörigen Seitenfensters auch im Randbereich möglich.

Das Auszugprofil 50 ist mit der Stange 51 zum Verschieben des Auszugprofils 50 und somit zum Abwickeln der Rollobahn 40 von der Wickelwelle 43 wirkverbunden. Die Stange 51 ist zumindest teilweise in einem Hohlrohr 52 versenkbar. Die Stange 51 und/oder das Hohlrohr 52 benötigt/benötigen einigen geringen Bauraum an der Seitentür 2 und kann/können so einfach in diese integriert werden. Beim Versenken der Stange 51 wird eine Feder, beispielsweise eine Schraubendruckfeder 6 zusammengedrückt. Die Schraubendruckfeder 6 wirkt dabei als mechanisches Antriebsmittel, wobei ein Abwickeln der Rollobahn 40 aufgrund der Federkraft der Schraubendruckfeder 6 erfolgen kann und/oder dadurch unterstützt wird. In anderen Ausgestaltungen wird das Auszugprofil in einer oder zwei seitlichen Führungsschiene(n) geführt, wobei in der Führungsschiene ein Feder zum Abwickeln der Rollobahn vorgesehen sein kann. Zum Aufwickeln der Rollobahn 40 auf die Wickelwelle 43 ist vorzugsweise eine nicht dargestellte Rückstellfeder vorgesehen. Um die Rollobahn 40 in einer bestimmten Position zu halten, ist erfindungsgemäß eine Blockiereinrichtung 7 vorgesehen. Die erfindungsgemäße Blockiereinrichtung 7 umfasst eine push-push-Verriegelung, so dass die Stange 51 und/oder das Auszugprofil 50 wenigstens in einer Verstauposition der Rollobahn 40 arretierbar ist/sind, wobei die Arretierung durch ein Drücken und/oder Bewegen entgegen der Abwickelrichtung lösbar ist. In der dargestellten Ausführungsform wirkt die Blockiereinrichtung 7 mit der Stange 51 zusammen. Zu diesem Zweck umfasst in dem dargestellten Ausführungsbeispiel die Blockiereinrichtung 7 ein in Fig. 2 nicht dargestelltes Rastelement, welches mit dem Linearführungsmittel 5 in einer Verstauposition der Rollobahn 40 für eine Arretierung zusammenwirkt.

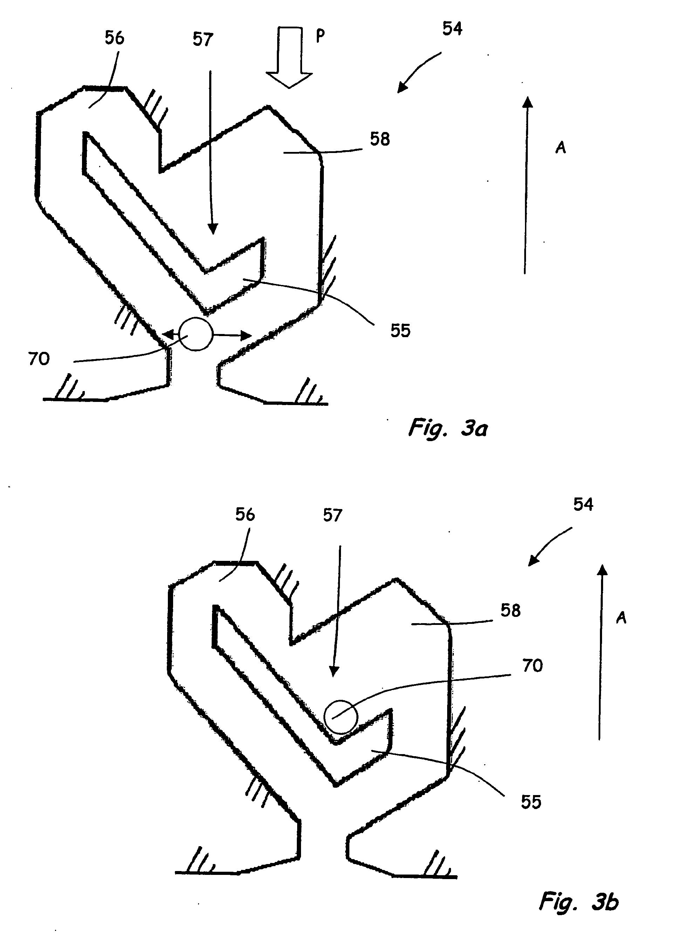

Fig. 3a und 3b zeigen schematisch eine Führungsnut 54 einer push-push-Verriegelung. Die Führungsnut 54 oder Kulisse ist zumindest teilweise als Herzkurve gestaltet. In der Führungsnut 54 ist ein an der Blockiereinrichtung 7 gemäß Fig. 2 angeordnetes Rastelement 70 geführt. Das Rastelement 70 ist, wie durch die Pfeile dargestellt, in einer Richtung quer zu der Abwickelrichtung A verschieblich in der Blockiereinrichtung 7 gelagert. Die Führungsnut 54 ist beispielsweise an dem Auszugprofil 50 oder der Stange 51 gemäß Fig. 2 ausgebildet. Zum Verriegeln wird das Auszugprofil 50 und/oder die Stange 51 und damit die Führungsnut 54 durch Aufbringen einer Druckkraft P entgegen der Abwickelrichtung A bewegt, in der Darstellung nach unten. Dabei wird das Rastelement 70 durch die Schräge eines in der Führungsnut 54 ausgebildeten Gegenrastelements 55 ausgelenkt, in der dargestellten Ausführungsform nach links. Sobald ein Umkehrpunkt 56 erreicht wird, kann die Kraft zum Bewegen der Stange 51 und/oder des Auszugprofils 50 reduziert werden, wobei die Stange 51 und damit die Führungsnut 54 beispielsweise aufgrund der Kraft der Schraubendruckfeder 6 gemäß Fig. 2 in Abwickelrichtung A, in der Darstellung nach oben, bewegt wird. Dadurch kommt das Rastelement 70 an einer Raststelle 57 in Eingriff mit dem Gegenrastelement 55. Das Rastelement 70 wirkt dabei derart mit dem Gegenrastelement 55 zusammen, dass die Bewegung des Auszugprofils 50 und/oder der Stange 51 in die Abwickelrichtung A verhindert wird. Durch erneutes Bewegen der Stange 51 und/oder des Auszugprofils 50 entgegen der Abwickelrichtung A wird die Führungsnut in der Darstellung nach unten bewegt und das Rastelement 70 aufgrund der Form der Führungsnut 54 seitlich ausgelenkt. Die Auslenkung erfolgt in dem dargestellten Ausführungsbeispiel nach rechts. Dadurch wird ein Zusammenwirken des Rastelements 70 mit dem Gegenrastelement 55 und damit die Blockiereinrichtung 7 gemäß Fig. 2 gelöst. Nach Erreichen eines Umkehrpunktes 58 kann eine Betätigungskraft weggenommen werden, wodurch die Rollobahn 40 aufgrund der Kraft der Schraubendruckfeder 6 ausgefahren wird, d.h. in Abwickelrichtung A bewegt wird.

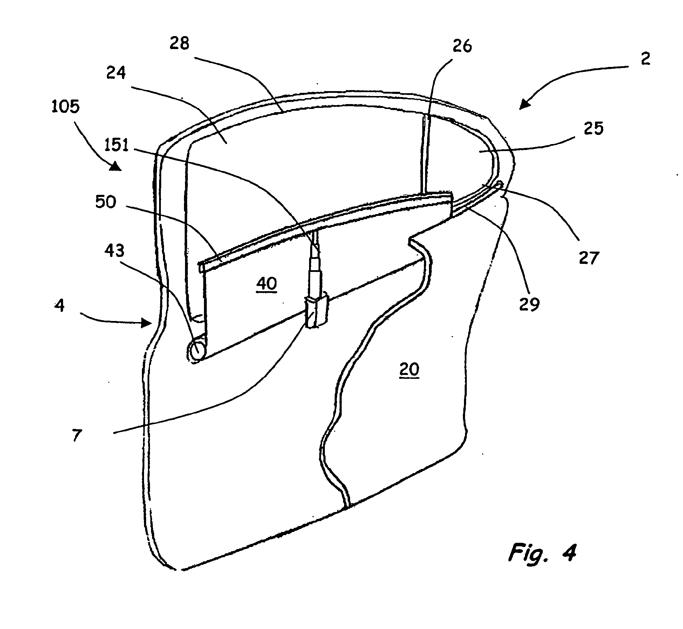

Fig. 4 zeigt schematisch die Seitentür 2 gemäß Fig. 1 mit einem Seitenfensterrollo 4 gemäß einem zweiten Ausführungsbeispiel der Erfindung. Eine Betätigungsvorrichtung 105 für das Seitenfensterrollo 4 umfasst einen Teleskopstab 151, der an dem Auszugprofil 50 angreift, so dass das Auszugprofil 50 in der dargestellten Ausführungsform in Richtung des oberen Rands 28 der Fensteröffnung 23 zum Abwickeln der Rollobahn 40 bewegbar ist. Der dargestellte Teleskopstab 151 wird durch eine in Fig. 4 nicht sichtbare Schraubendruckfeder oder dergleichen ausgefahren. Wie in Fig. 4 erkennbar, ist ebenfalls eine erfindungsgemäße Blockiereinrichtung 7 vorgesehen. Die Blockiereinrichtung 7 ist dabei derart gestaltet, dass das Seitenfensterrollo 4 stufenweise abwickelbar ist. Ist die Rollobahn 40 vollständig auf der Wickelwelle 43 aufgewickelt, so wird bei einem ersten Andrücken und/oder Bewegen des Auszugprofils 50 und/oder des Teleskopstabs 151 entgegen einer Abwickelrichtung lediglich ein erstes Segment des Teleskopstabs 151 ausgefahren. Durch erneutes Andrücken mit geringer Kraft und/oder Bewegen des Auszugprofils 50 entgegen der Abwickelrichtung wird ein weiteres Segment des Teleskopstabs 151 ausgefahren. In anderen Ausgestaltungen ist es jedoch auch denkbar, dass der Teleskopstab 151 auch bei erstmaliger Betätigung vollständig oder kontinuierlich ausgefahren wird oder eine von den Segmenten unabhängige Abstufung erfolgt.

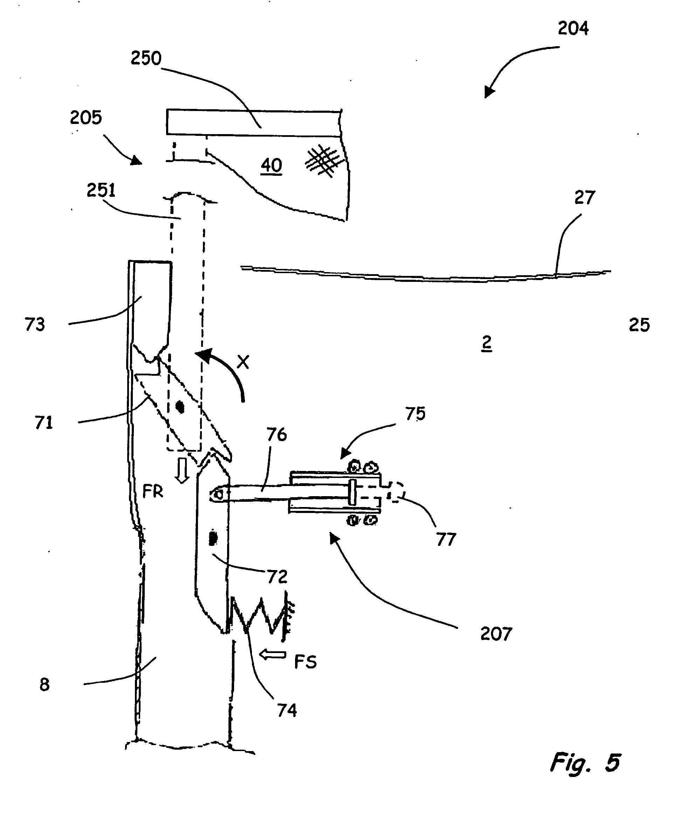

Fig. 5 zeigt schematisch ein Seitenfensterrollo 204 gemäß einem dritten Ausführungsbeispiel der Erfindung. Das Seitenfensterrollo 204 ist in Höhe eines schematisch angedeuteten unteren Rands 27 einer ebenfalls nur schematisch angedeuteten Seitentüre 2 versenkbar. Ein Linearführungsmittel 205 für das Seitenfensterrollo 204 umfasst das Auszugsprofil 250, sowie eine seitlich an der Rollobahn 40 angeordnete Stange 251 oder Antenne. Die Stange 251 ist zumindest im Bereich der Seitentüre 2 in einer Führungsschiene 8 geführt. Die Stange 251 und damit die Rollobahn 40 sind durch eine Blockiereinrichtung 207 in der dargestellten Position verriegelbar, wobei es sich dabei in dem dargestellten Ausführungsbeispiel um die Schutzposition der Rollobahn 40 handelt. Die Blockiereinrichtung 207 umfasst einen verschwenkbaren Schalter 71, welcher verschwenkbar an der Stange 251 angebracht ist, und ein schwenkbares Schaltelement 72, durch welches der Schalter 71 betätigbar ist. Die Breite des Schalters 71 ist in etwa gleich oder kleiner der Breite der Stange 251, wobei der Schalter 71 zum Verschieben der Stange 251 fluchtend mit der Stange 251 anordenbar ist. Der Schalter 71 ist weiter in die dargestellte Stellung verschwenkbar, wobei eine Längsachse des Schalters 71 mit der Längsachse der Stange 251 einen Winkel einschließt. In der in Fig. 5 dargestellten Anordnung wird der Schalter 71 durch eine in der Darstellung nach unten wirkende Rückholkraft FR der Rollobahn 40 in ein durch den Pfeil X gezeigte Richtung gezwungen. In dem dargestellten Ausführungsbeispiel ist weiter eine Gegenfeder 74 vorgesehen, welche das Schaltelement 72 belastet und dadurch den Schalter 71 in die durch den Pfeil X dargestellte Richtung zwingt. In einer so erzwungenen Schrägstellung des Schalters 71 wird der Schalter 71 zwischen dem Schaltelement 72 und einem türenseitigen Gegenrastelement 73 gehalten, so dass ein Verschwenken entgegen die durch den Pfeil X gezeigte Richtung zum Ausrichten des Schalters 71 mit der Stange 251 verhindert wird.

Die dargestellte Blockiereinrichtung 207 umfasst weiter einen Antrieb 75 mit einem Kolben 76, durch welchen das Schaltelement 72 betätigbar ist. Der Antrieb 75 ist beispielsweise mit einem Stellmotor gestaltet, so dass eine Betätigung durch einen Fahrer fernbedient möglich ist. Alternativ und/oder zusätzlich kann ein Stellknopf 77 vorgesehen sein, durch welchen das Schaltelement 72 betätigbar ist.

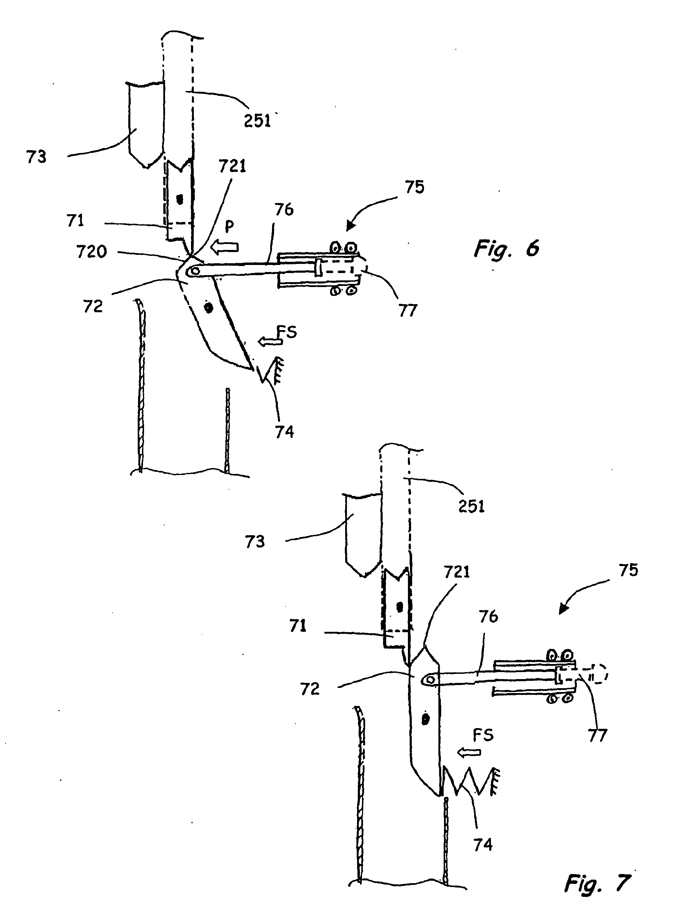

Fig. 6 und Fig. 7 zeigen schematische eine Betätigung der Blockiereinrichtung 207 gemäß Fig. 5. Wie schematisch in Fig. 6 dargestellt, wird durch den Stellmotor 75 und/oder den Stellknopf 77 eine Kraft P aufgebracht, wobei das Schaltelement 72 entgegen der Kraft FS der Gegenfeder 74 betätigt wird, in der dargestellten Ausführungsform verschwenkt wird. Das Schaltelement 72 wirkt an seiner Schaltfläche 720 derart mit dem Schalter 71 zusammen, dass der Schalter 71 verschwenkt wird, so dass der Schalter 71 mit der Stange 251 fluchtet. Das Schaltelement 72 wird bis zu einem Kontakt mit dem Schalter 71 in einem Umkehrpunkt 721 verschwenkt, welcher in dem dargestellten Ausführungsbeispiel durch eine Spitze des Schaltelements 72 an der Schaltfläche 720 gebildet ist. Bei Zurücknehmen der Kraft P nach Erreichen des Umkehrpunkts 721 wird der Schalter 71 durch das Schaltelement 72 wie in Fig. 7 erkennbar in der fluchtenden Anordnung gehalten, so dass die Stange 251 verschiebbar und damit die Rollobahn aufwickelbar ist.

In einer weiteren Ausgestaltung sperrt die Blockiereinrichtung 207 ein Abwickeln der Rollobahn 40.

Durch einen Antrieb 75, beispielsweise einen Stellmotor und/oder einen Elektro-Magneten, ist ein fernbedientes Lösen und/oder Arretieren der Blockiervorrichtung 207 möglich. Zum Lösen und/oder Arretieren ist jeweils nur ein geringer Stellweg notwendig und/oder eine geringe Kraft aufzubringen. Je nach Gestaltung des Antriebsmittels für die Rollobahn 40 erfolgt nach dem Lösen der Blockiervorrichtung 207 ein automatisches Abwickeln, beispielsweise aufgrund einer Kraft einer Federspeicheranordnung, oder ein automatisches Aufwickeln, beispielsweise aufgrund einer Kraft einer Rückholfeder des Beschattungsrollos.

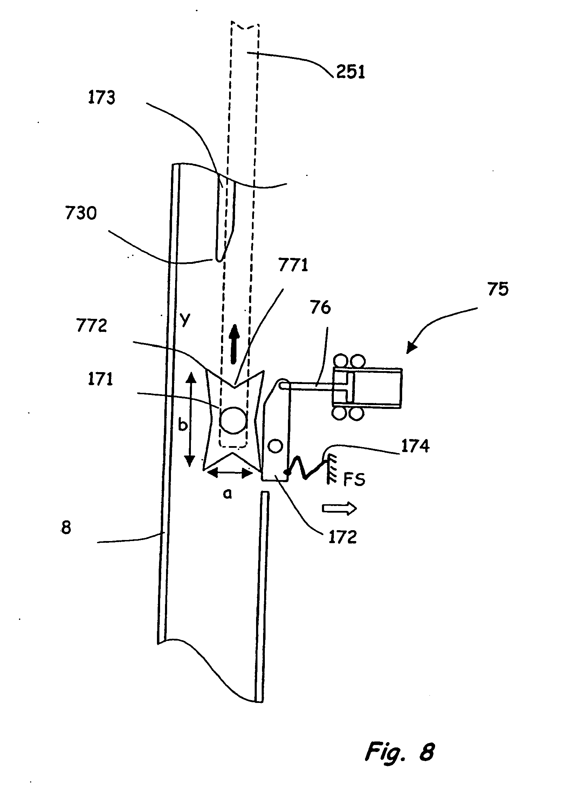

Fig. 8 bis 12 zeigen schematisch eine Betätigung einer Blockiereinrichtung 307. Die Blockiereinrichtung 307 ist ähnlich der Blockiereinrichtung 207 gemäß Fig. 5 ausgebildet und für gleiche oder ähnliche Bauteile werden gleiche oder ähnliche Bezugszeichen verwendet.

Die Blockiereinrichtung 307 umfasst einen verschwenkbaren Schaltkopf 171, welcher verschwenkbar an der Stange 251 des Seitenfensterrollos 204 gemäß Fig. 5 angebracht ist. Der Schaltkopf 171 weist vier konkave Ecken 771 und vier konvexe Ecken 772 auf, die einander abwechselnd angeordnet sind, wobei durch eine Verbindung der konvexen Ecken 772 des Schaltkopfs 171 ein Rechteck mit einer Längsseite a und einer Breitseite b gebildet werden kann. Die Blockiervorrichtung 307 umfasst weiter ein fahrzeugseitig angebrachtes, schwenkbares Schaltstück 172, durch welches der Schaltkopf 171 betätigbar ist. Das Schaltstück 172 wird an einem Ende durch eine Feder 174 mit der Kraft FS belastet. An dem gegenüberliegende Ende ist ein Kolben 76 eines Haltemagneten 75 angebracht, wobei das Schaltstück 172 um eine zwischen den Enden angeordnete Achse verschwenkbar ist. In dem dargestellten Ausführungsbeispiel ist der Haltemagnet 75 in der in Fig. 8 dargestellten Position unbelastet.

In der in Fig. 8 dargestellten Anordnung des Schaltkopfs 171 ist die Stange 251 und damit das Seitenfensterrollo 204 in die durch den Pfeil Y gekennzeichnete Richtung aus der Führungsschiene 8 ausfahrbar. Ein Ausfahren ist dabei möglich, bis der Schaltkopf 171 ein an der Führungsschiene 8 vorgesehenes Gegenrastelement 173 erreicht, diese Position wird auch als Schaltpunkt bezeichnet.

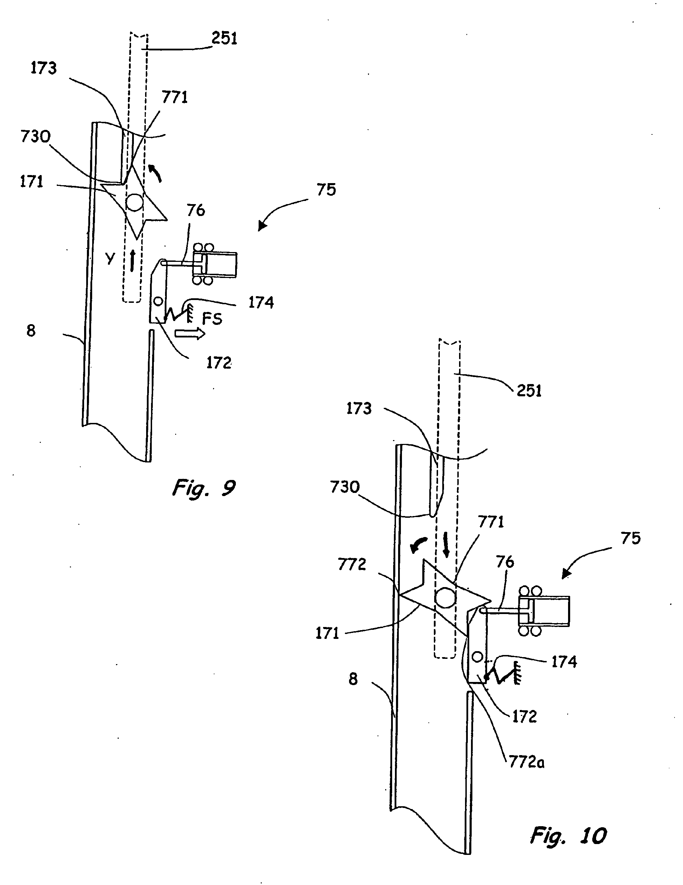

Wie in Fig. 9 dargestellt, ist das Gegenrastelement 173 so angeordnet, dass eine Spitze 730 bei Erreichen des Schaltpunkts an einer Flanke einer oberen konkaven Ecke 771 anstößt, so dass der Schaltkopf 171 in eine Raststellung verschwenkt wird. Im dargestellten Ausführungsbeispiel erfolgt ein Verschwenken entgegen dem Uhrzeigersinn. Je nach Ausgestaltung der Feder 174 kann nach Wegfall der Kontaktkraft zwischen Schaltstück 172 und Schaltkopf 171 aufgrund der Kraft FS der Feder 174 auch das Schaltstück 172 verschwenkt werden. Im dargestellten Fall wäre ein Verschwenken entgegen dem Uhrzeigersinn denkbar (nicht dargestellt). In anderen Ausgestaltungen ist der Kolben 76 in der dargestellten Stellung am Anschlag, so dass kein weiteres Verschwenken mehr möglich ist.

Wie in Fig. 10 dargestellt, kann nach Erreichen des Schaltpunktes, das Seitenfensterrollo 204 beispielsweise durch Wegfall der Auszugskraft aufgrund der Schwerkraft entgegen der Auszugsrichtung nach unten bewegt werden. Dabei verrastet der Schaltkopf 171 mit zwei diagonal gegenüberliegende konvexen Ecken 772, 772a zwischen einer Wandung der Führungsschiene 8 und dem Schaltstück 172. In dem dargestellten Ausführungsbeispiel wird das Schaltstück 172 durch die Feder 174 und den Schaltkopf 172 in der dargestellten Stellung gehalten.

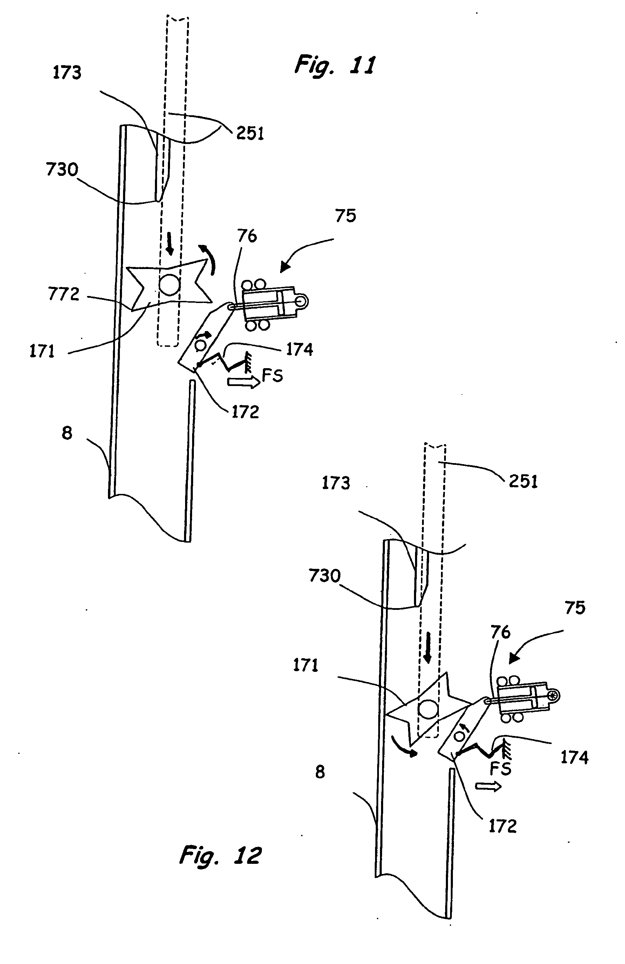

Fig. 11 zeigt die Blockiereinrichtung 307 beim Lösen der Verrastung. Zu diesem Zweck wird durch den Haltemagnet 75 eine Kraft aufgebracht, so dass das Schaltstück 172 entgegen der Kraft FS der Feder 174 verschwenkt. Dabei wird der Schaltkopf 171 so verschwenkt und/oder verschoben, dass die Verrastung gelöst wird. In anderen Ausgestaltungen ist die Feder 174 so gestaltet, dass sie das Schaltstück 172 im Uhrzeigersinn belastet, wobei durch den Haltemagneten 75 eine Gegenkraft aufgebracht wird, welche zum Lösen der Verrastung reduziert oder weggenommen wird.

Fig. 12 zeigt die Blockiereinrichtung 307 beim Einfahren des Seitenfensterrollos 204 nach Lösen der Verrastung, wobei das Schaltstück 172 nach Wegfall der durch den Haltemagneten 75 aufgebrachten Kraft wieder zurückverschwenkt wird.

Dieser Verriegel- und Entriegelmechanismus gemäß den Figuren 8 bis 12 wird ebenfalls als push-push-Verriegelung im Sinne der Erfindung bezeichnet. Dabei wird die Kraft zum Verriegeln an einer Breitseite a des Schaltkopfes 171 und die Kraft zum Entriegeln an der Längsseite b des Schaltkopfes 172 aufgebracht, wobei jeweils eine kurzzeitige Kraftaufbringung ein Verriegeln bzw. ein Entriegeln bewirkt.

In einer weiteren Ausgestaltung kann eine Blockiereinrichtung gemäß den Figuren 8 bis 12 zum Verriegeln in einer Verstauposition eingesetzt werden, wobei die Elemente um eine horizontale Achse gespiegelt anzuordnen sind. Die Bewegung von der Schaltposition gemäß Fig. 9 in die Rastposition gemäß Fig. 10 erfolgt in dem dargestellten Ausführungsbeispiel durch die Gewichtskraft. Ebenso wird zum Verrasten gemäß Fig. 10 die Gewichtskraft genutzt. Bei einem Verriegeln mit einer entsprechenden Blockiervorrichtung ist eine der Wirkungsweise der Gewichtskraft entsprechende Kraft durch eine Feder, beispielsweise eine Federspeicheranordnung zum Ausfahren des Rollos, aufzubringen.

## Patentansprüche

1. Beschattungsrollo für eine Kraftfahrzeugscheibe mit einem auf einer Wickelwelle (43) auf- und abwickelbaren, flexiblen Flächengebilde (40), das mit Hilfe mindestens eines Linearführungsmittels (5, 105, 205) aus einer Verstauposition in eine zumindest teilweise abgewickelte Schutzposition bewegbar ist, und mit mindestens einer lösbaren Blockiereinrichtung (7, 207, 307), durch welche das Linearführungsmittel (5, 105, 205) in mindestens einer Position arretierbar ist, **dadurch gekennzeichnet, dass** die Blockiereinrichtung (7, 207, 307) eine push-push-Verriegelung umfasst.

2. Beschattungsrollo nach Anspruch 1, **dadurch gekennzeichnet, dass**, das Linearführungsmittel (5, 105, 205) in der Verstauposition arretierbar ist, wobei die Blockiereinrichtung (7) durch Aufbringen einer Kraft an dem Linearführungsmittel und/oder Bewegen des Linearführungsmittels entgegen einer Abwickelrichtung (A) lösbar ist.

3. Beschattungsrollo nach Anspruch 2, **dadurch gekennzeichnet, dass** ein in die Abwickelrichtung (A) wirksames mechanisches Antriebsmittel (6) vorgesehen ist, durch das nach einem Lösen der Blockiereinrichtung (7) das flexible Flächengebilde (40) von der Wickelwelle (43) abwickelbar ist.

4. Beschattungsrollo nach Anspruch 3, **dadurch gekennzeichnet, dass** das mechanische Antriebsmittel (6) als Federspeicheranordnung gestaltet ist.

5. Beschattungsrollo nach einem der Ansprüche 1 bis 4, **dadurch gekennzeichnet, dass** die Blockiereinrichtung (7) mindestes ein Rastelement (70) umfasst, welches mit dem Linearführungsmittel (5, 105, 205) für eine Arretierung zusammenwirkt.

6. Beschattungsrollo nach Anspruch 5, **dadurch gekennzeichnet, dass** das Linearführungsmittel (5, 105, 205) eine Führungsnut (54) umfasst, in welcher das Rastelement (70) geführt ist, wobei die Führungsnut (54) mindestens eine Raststelle (57) aufweist.

7. Beschattungsrollo nach Anspruch 6, **dadurch gekennzeichnet, dass** die Führungsnut (54) zumindest abschnittsweise die Form einer Herzkurve aufweist.

8. Beschattungsrollo nach einem der Ansprüche 1 bis 7, **dadurch gekennzeichnet, dass** eine Betätigungsrichtung der push-push-Verriegelung quer zur Abwickelrichtung (A), insbesondere in einem Winkel von ca. 90° verläuft.

9. Beschattungsrollo nach Anspruch 8, **dadurch gekennzeichnet, dass** das Linearführungsmittel (5, 105, 205) einen schwenkbaren Schalter (71, 171) und die Blockiereinrichtung (207, 307) mindestens ein bewegbares Schaltelement (72, 172) zum Betätigen des Schalters aufweisen, wobei der Schalter (71, 171) und das Schaltelement (72, 172) zum Arretieren des Linearführungsmittels (5, 105, 205) zusammenwirken.

10. Beschattungsrollo nach einem der Ansprüche 1 bis 8, **dadurch gekennzeichnet, dass** die Blockiereinrichtung (7, 207, 307) einen Antrieb, insbesondere einen Stellmotor und/oder einen Magneten, umfasst.

11. Beschattungsrollo nach einem der Ansprüche 1 bis 10, **dadurch gekennzeichnet, dass** das Linearführungsmittel (5, 105, 205) mindestens eine Stange (51, 251) umfasst, die mit einem an dem flexiblen Flächengebilde (40) angebrachten Auszugprofil (50, 250) für eine Bewegungsübertragung wirkverbunden ist.

12. Beschattungsrollo nach Anspruch 11, **dadurch gekennzeichnet, dass** das Linearführungsmittel (5, 105, 205) mindestens einen Teleskopstab (151) umfasst, der mit dem an dem flexiblen Flächengebilde (40) angebrachten Auszugprofil (50, 250) für die Bewegungsübertragung wirkverbunden ist.

## Claims

1. Roller shade for a motor vehicle window having a flexible planar structure (40) that can be wound onto and unwound from a winding shaft (43) and that can be moved with the aid of at least one linear guide means (5, 105, 205) from a stowed position into an at least partially unwound protection position, and having at least one releasable locking device (7, 207, 307) by which the linear guide means (5, 105, 205) can be locked in at least one position, **characterized in that** the locking device (7, 207, 307) comprises a push-push lock.

2. Roller shade according to Claim 1, **characterized in that** the linear guide means (5, 105, 205) can be locked in the stowed position, where the locking device (7) can be released by applying a force to the linear guide means and/or by moving the linear guide means against an unwinding direction (A).

3. Roller shade according to Claim 2, **characterized in that** a mechanical drive means (6) effective in the unwinding direction (A) is provided, by which the flexible planar structure (40) can be unwound from the winding shaft (43) after a release of the locking device (7).

4. Roller shade according to Claim 3, **characterized in that** the mechanical drive means (6) is designed as a spring-loaded arrangement.

5. Roller shade according to one of Claims 1 to 4, **characterized in that** the locking device (7) comprises at least one engaging element (70) interacting with the linear guide means (5, 105, 205) to achieve locking.

6. Roller shade according to Claim 5, **characterized in that** the linear guide means (5, 105, 205) comprises a guide groove (54) inside which the engaging element (70) is guided, the guide groove (54) having at least one engagement position (57).

7. Roller shade according to Claim 6, **characterized in that** the guide groove (54) has at least in some sections the form of a cardioid.

8. Roller shade according to one of Claims 1 to 7, **characterized in that** an actuation direction of the push-push lock runs transversely to the unwinding direction (A), in particular at an angle of about 90°.

9. Roller shade according to Claim 8, **characterized in that** the linear guide means (5, 105, 205) has a pivotable switch (71, 171) and the locking device (207, 307) has at least one movable switching element (72, 172) for actuating the switch, where the switch (71, 171) and the switching element (72, 172) interact to lock the linear guide means (5, 105, 205).

10. Roller shade according to one of Claims 1 to 8, **characterized in that** the locking device (7, 207, 307) comprises a drive, in particular a servomotor and/or a magnet.

11. Roller shade according to one of Claims 1 to 10, **characterized in that** the linear guide means (5, 105, 205) comprises at least one rod (51, 251) which is operatively connected to a pull-out strip (50, 250) attached to the flexible planar structure (40) for transmission of the movement.

12. Roller shade according to Claim 11, **characterized in that** the linear guide means (5, 105, 205) comprises at least one telescopic rod (151) which is operatively connected to the pull-out section (50, 250) attached to the flexible planar structure (40) for transmission of the movement.

## Revendications

1. Store d'ombrage pour une vitre de véhicule, avec une structure plane souple (40) enroulable et déroulable sur un arbre d'enroulement (43) et qui peut être déplacée d'une position rangée dans une position de protection au moins partiellement déroulée à l'aide d'au moins un moyen de guidage linéaire (5, 105, 205), et avec au moins un dispositif de blocage (7, 207, 307) déblocable grâce auquel le moyen de guidage linéaire (5, 105, 205) peut être bloqué dans au moins une position, **caractérisé en ce que** le dispositif de blocage (7, 207, 307) comprend un verrouillage push-push.

2. Store d'ombrage selon la revendication 1, **caractérisé en ce que** le moyen de guidage linéaire (5, 105, 205) peut être bloqué dans la position rangée, sachant que le dispositif de blocage (7) peut être débloqué en appliquant une force sur le moyen de guidage linéaire et/ou en mettant en mouvement le moyen de guidage linéaire dans le sens opposé à un sens de déroulement (A).

3. Store d'ombrage selon la revendication 2, **caractérisé en ce qu'**est prévu un moyen d'entraînement mécanique (6) agissant dans le sens de déroulement (A) grâce auquel, après un déblocage du dispositif de blocage (7), la structure plane souple (40) peut être déroulée de l'arbre d'enroulement (43).

4. Store d'ombrage selon la revendication 3, **caractérisé en ce que** le moyen d'entraînement mécanique (6) est conçu comme système accumulateur à ressort.

5. Store d'ombrage selon l'une des revendications 1 à 4, **caractérisé en ce que** le dispositif de blocage (7) comprend au moins un élément de crantage (70) qui agit conjointement avec le moyen de guidage linéaire (5, 105, 205) pour réaliser un blocage.

6. Store d'ombrage selon la revendication 5, **caractérisé en ce que** le moyen de guidage linéaire (5, 105, 205) comprend une rainure de guidage (54) dans laquelle est guidé l'élément de crantage (70), la rainure de guidage (54) présentant au moins une position de crantage (57).

7. Store d'ombrage selon la revendication 6, **caractérisé en ce que** la rainure de guidage (54) présente au moins partiellement la forme d'une cardioïde.

8. Store d'ombrage selon l'une des revendications 1 à 7, **caractérisé en ce qu'**une direction d'actionnement du verrouillage push-push s'étend transversalement par rapport au sens de déroulement (A), en particulier selon un angle d'environ 90°.

9. Store d'ombrage selon la revendication 8, **caractérisé en ce que** le moyen de guidage linéaire (5, 105, 205) présente un organe de commutation pivotant (71, 171) et que le dispositif de blocage (207, 307) présente au moins un élément de commande mobile (72, 172) pour actionner l'organe de commutation, l'organe de commutation (71, 171) et l'élément de commande (72, 172) agissant conjointement pour bloquer le moyen de guidage linéaire (5, 105, 205).

10. Store d'ombrage selon l'une des revendications 1 à 8, **caractérisé en ce que** le dispositif de blocage (7, 207, 307) comprend un entraînement, en particulier un servomoteur et/ou un aimant.

11. Store d'ombrage selon l'une des revendications 1 à 10, **caractérisé en ce que** le moyen de guidage linéaire (5, 105, 205) comprend au moins une tige (51, 251) qui est liée activement à un profilé de déroulement (50, 250) placé sur la structure plane souple (40) afin de réaliser une transmission de mouvement.

12. Store d'ombrage selon la revendication 11, **caractérisé en ce que** le moyen de guidage linéaire (5, 105, 205) comprend au moins une tige télescopique (151) qui est liée activement au profilé de déroulement (50, 250) placé sur la structure plane souple (40) afin de réaliser la transmission de mouvement.
